# EUROPÄISCHE PATENTSCHRIFT

(11) **EP 3 096 298 B1**
(45) Veröffentlichungstag und Bekanntmachung des Hinweises auf die Patenterteilung: **24.06.2020**
(21) Anmeldenummer: 16170874.8
(22) Anmeldetag: 23.05.2016
(51) Int. Cl.: G07C 9/00, H04L 12/28

(54) **VERFAHREN ZUM BETRIEB EINER SCHLIESSANLAGE UND SCHLIESSANLAGE**
METHOD FOR OPERATION A LOCKING SYSTEM AND LOCKING SYSTEM
PROCÉDÉ POUR OPÉRER UN SYSTÈME DE VERROUILLAGE ET SYSTÈME DE VERROUILLAGE

(30) Priorität: 21.05.2015 DE 102015108028
(43) Veröffentlichungstag der Anmeldung: 23.11.2016
(73) Patentinhaber: Carl Fuhr GmbH & Co. KG, 42579 Heiligenhaus (DE)
(72) Erfinder: Meis, Guido, 50737 Köln (DE); Tönges, Reiner, 42579 Heiligenhaus (DE)
(74) Vertreter: von dem Borne, Andreas

(56) Entgegenhaltungen:
- WO-A1-2009/088901
- US-A1- 2004 036 573
- US-A1- 2006 068 759

## Beschreibung

Die Erfindung betrifft ein Verfahren zum Betrieb einer Schließanlage für eine Gebäudetür, mit zumindest
- einer Schließeinrichtung, z.B. einem motorbetriebenen Schloss,
- einer Steuerung, mit einem Empfänger für den Empfang eines Öffnungssignals per Funk,
- einer in Reichweite der Steuerung angeordneten Kommunikationseinheit als Netzwerkserver, welche in ein lokales Funknetzwerk eingebunden ist und welche außerdem einen Sender für die Übermittlung eines Öffnungssignals per Funk an den Empfänger der Steuerung aufweist,
- zumindest einem als Netzwerkclient arbeitenden Endgerät, welches in der Kommunikationseinheit angemeldet wird und
- einer oder mehreren Funk-Zutrittskontrolleinrichtungen mit einem Sender für die Übermittlung eines Öffnungssignals per Funk.

Schließanlage meint im Rahmen der Erfindung insbesondere eine Türschließanlage einer sicherheitsrelevanten Tür, z.B. einer Eingangstür eines Einfamilienhauses oder Mehrfamilienhauses oder auch eines gewerblich genutzten oder öffentlichen Gebäudes. Eine solche Türschließanlage weist zumindest einen Verriegelungsmechanismus zum Verriegeln und Entriegeln der Tür auf. Ergänzend oder alternativ zu mechanischen Zutrittskontrollsystemen (insbesondere Schlüsseln) sind als Identifizierungsvorrichtungen Funk-Zutrittskontrolleinrichtungen vorgesehen. Dabei kann es sich insbesondere um grundsätzlich bekannte Funkhandsender, Funk-Transponder, Funk-Fingerscanvorrichtungen und Funk-Codeeingabeeinrichtungen (Funktastaturen) handeln. Mit solchen "Funk-Schlüsseln" lässt sich die Schließanlage auch ohne mechanischen Schlüssel von berechtigten Personen "elektronisch" öffnen. Dazu ist das Schloss (welches z.B. als Mehrfachverriegelung ausgebildet sein kann) motorbetrieben, so dass zumindest ein (separates) Motoraggregat vorgesehen sein kann, mit dem zumindest eine Entriegelung des Schlosses (sowie gegebenenfalls außerdem auch eine Verriegelung) möglich ist. Die Steuerung kann in das Schloss bzw. in das Motoraggregat integriert sein. Bevorzugt handelt es sich um eine separate Steuerung, die im Türblatt oder im Türrahmen angeordnet sein kann und per Kabel oder kabellos den Motor (z.B. zum Entriegeln des Schlosses) ansteuert. Bei einer bekannten Schließanlage der beschriebenen Art sind die verschiedenen zutrittsberechtigten elektronischen Schlüssel in der Steuerung gespeichert, d.h., die einzelnen Komponenten werden in der Steuerung angelernt.

Zusätzlich zu den Funk-Zutrittskontrolleinrichtungen weist die Schließanlage eine Kommunikationseinheit als Netzwerkserver auf, welche gleichsam einen zusätzlichen elektronischen Schlüssel bildet, denn diese Kommunikationseinheit wird - so wie herkömmliche andere elektronische Schlüssel - als "zutrittsberechtigt" in der Steuerung gespeichert. Eine solche Kommunikationseinheit wird von der Carl Fuhr GmbH & Co. KG unter der Bezeichnung "SmartConnect" vermarktet. In dieser Kommunikationseinheit können mehrere Endgeräte (z.B. Smartphones) über eine intuitiv zu bedienende App angemeldet werden, so dass über das Smartphone per Funknetzwerk (insbesondere WLAN) mit der Kommunikationseinheit (SmartConnect) kommuniziert wird. Über das Smartphone kann z.B. ein Öffnungsbefehl an die Kommunikationseinheit übermittelt werden, wobei daraufhin von der Kommunikationseinheit (per Funk) ein Öffnungssignal an die Steuerung übermittelt wird. Die Kommunikationseinheit kann in einem separaten Gehäuse mit Netzteil und Netzstecker zur Verfügung gestellt werden. Sie wird z.B. innerhalb des Gebäudes in der Nähe der Tür in eine Netzsteckdose gesteckt und in der Steuerung "angelernt". Anschließend lässt sich dann z.B. per Smartphone die Tür entriegeln, wobei das Smartphone entweder per WLAN mit der Kommunikationseinheit oder gegebenenfalls auch über das Internet und das lokale WLAN kommuniziert. Auf diese Weise können eine Vielzahl von Benutzern bzw. Endgeräten sehr einfach verwaltet werden, weil für eine Vielzahl von Endgeräten lediglich eine einzige Kommunikationseinheit in der Steuerung angelernt werden muss. Dieses bekannte System auf der Basis des "Fuhr-SmartConnect" hat sich in der Praxis hervorragend bewährt, es ist jedoch weiter entwicklungsfähig.

Ein Verfahren und ein System zur ferngesteuerten Betätigung eines Türschlosses kennt man im Übrigen aus der WO 2009/088901 A1. Dabei ist ein Software RF Gateway in ein RF Maschennetzwerk und in ein WLAN-Netzwerk eingebunden. Über eine Funk-Zutrittskontrolleinrichtung besteht die Möglichkeit, ein Öffnungssignal per Funk an das Software RF Gateway zu übermitteln. Die Zutrittsberechtigung ist im Türschloss gespeichert und wird auch dort überprüft.

Im Übrigen beschreibt die US 2006/0068759 ein System und ein Verfahren zur Authentifizierung im Zuge der Fernbetätigung von verschiedenen Komponenten innerhalb eines Heimnetzwerkes. Dabei soll auch eine Schließanlage mit einer Fernbedienung betätigbar sein, die in das Heimnetzwerk eingebunden ist. Die einzelnen Geräte sind jeweils WLAN-fähig oder zumindest über einen WLANfähigen Transceiver mit dem WLAN gekoppelt. Die Zutrittsberechtigungen sollen in einem stationären Server gespeichert werden, der ebenfalls in das WLAN eingebunden ist.

Der Erfindung liegt die Aufgabe zugrunde, ein Verfahren zum Betrieb einer Schließanlage für eine Gebäudetür der eingangs beschriebenen Art zu schaffen, welches sich durch erweiterte Funktionalität und insbesondere verbesserte Benutzerverwaltung auszeichnet.

Zur Lösung dieser Aufgabe lehrt die Erfindung ein Verfahren mit den Merkmalen des Anspruchs 1 und eine Schließanlage mit den Merkmalen des Anspruchs 5. Es ist vorgesehen, dass die Zutrittsberechtigungen der Funk-Zutrittskontrolleinrichtungen (bzw. Funk-Schlüsseln) in der Kommunikationseinheit speicherbar sind.

Die Erfindung geht dabei von der Erkenntnis aus, dass die Funktionalität einer grundsätzlich bekannten (WLAN-)Kommunikationseinheit erweitert werden kann, wenn die grundsätzlich bekannten Funk-Zutrittskontrolleinrichtungen (z.B. Funk-Handsender, Funk-Transponder, Funk-Fingerscanvorrichtungen, Funk-Codeeingabeeinrichtungen) nicht mehr wie bisher in der Steuerung angelernt und gespeichert werden, sondern in der Kommunikationseinheit. In der Kommunikationseinheit werden folglich nicht nur die autorisierten (WLAN-) Endgeräte, sondern auch die herkömmlichen Funk-Zutrittskontrolleinrichtungen verwaltet, die mit der Zutritts-Kontrolleinrichtung nicht über das Funknetzwerk (WLAN), sondern über herkömmliche Funk-Signale kommunizieren. Denn die Kommunikationseinheit weist nicht nur einen Sender für Funksignale von der Kommunikationseinheit an die Steuerung, sondern auch einen Empfänger für den Empfang von Funksignalen der Funk-Zutrittskontrolleinrichtungen auf. Damit ist es möglich, die Funk-Zutrittskontrolleinrichtungen in der Kommunikationseinheit anzulernen. Im Zuge des Betriebes wird dann von der jeweiligen Funk-Zutrittskontrolleinrichtung (z.B. dem Funk-Handsender) ein Öffnungsbefehl per Funk an die Kommunikationseinheit gesendet. Die Überprüfung der Berechtigung erfolgt dann in der Kommunikationseinheit und im Falle einer positiv geprüften Berechtigung sendet die Kommunikationseinheit ein Öffnungssignal per Funk an den Empfänger der Steuerung. In der Kommunikationseinheit werden folglich nun nicht mehr nur die funknetzwerkfähigen Endgeräte (z.B. Smartphones oder dergleichen) gespeichert und überprüft, sondern auch die grundsätzlich bekannten Funk-Zutrittskontrolleinrichtungen, die bislang im Stand der Technik in der Steuerung angelernt wurden.

Durch diese Maßnahmen werden die Möglichkeiten der Nutzerverwaltung erweitert und vereinfacht. Bei der bisherigen Speicherung der Funk-Zutrittskontrollvorrichtungen in der Steuerung waren die Möglichkeiten, einzelne Berechtigungen zu ändern, zu löschen oder gegebenenfalls auch zeitlich zu begrenzen sehr eingeschränkt. Es bestand zwar die Möglichkeit, mit Hilfe einer PC-Anwendungssoftware Nutzer zu verwalten und die Daten an die Steuerung im Sinne einer Programmierung zurückzuschreiben. Erfindungsgemäß kann jedoch die Zutrittsberechtigung insgesamt sehr komfortabel in der Kommunikationseinheit verwaltet werden, so dass nur noch die Kommunikationseinheit als berechtigt in der Steuerung angelernt werden muss. Die Kommunikationseinheit ist folglich das einzige Gerät, das in der Steuerung als berechtigt gespeichert werden muss. Da die Kommunikationseinheit eine standardisierte Schnittstelle hat, können Funk-Zutrittskontrollvorrichtungen und Endgeräte verschiedener Hersteller für den Benutzer einheitlich dargestellt werden. Es lassen sich Berechtigungen einzelner Zutrittskontrolleinrichtungen ergänzen, löschen und zeitliche Begrenzungen vorsehen. Damit kann auch eine komfortable Verwaltung von Zutrittskontrolleinrichtungen erfolgen, für welche es bisher keine visuelle Darstellungsmöglichkeit der gespeicherten Berechtigung gab. Darüber hinaus wird der Funktionsumfang der Zutrittskontrolleinrichtung durch die vorgestellte Speicherung in der Kommunikationseinheit dahingehend entscheidend vergrößert, dass die Zuordnung der Funktionen einer Zutrittskontrolleinrichtung nun in der Kommunikationseinheit beliebig erfolgen und geändert werden kann. So besteht in der Praxis z.B. die Möglichkeit, dass ein Funkschlüssel eines Herstellers nun auch z.B. der Öffnung eines Schlosses eines anderen Herstellers zugeordnet werden kann.

Erfindungsgemäß wird folglich zwischen Endgeräten einerseits und Funk-Zutrittskontrolleinrichtungen andererseits unterschieden. Bei Endgeräten handelt es sich um solche, die über das Funknetzwerk (insbesondere WLAN) mit der Kommunikationseinheit kommunizieren, z.B. Smartphones oder dergleichen. Bei den Funk-Zutrittskontrolleinrichtungen handelt es sich um übliche Zutrittskontrolleinrichtungen, die ein Funksignal an den Empfänger der Kommunikationseinheit senden oder ein Funksignal von der Kommunikationseinheit empfangen.
Die Kommunikation der Endgeräte mit der Kommunikationseinheit erfolgt bevorzugt via TCP/IP. Dabei wird als lokales Funk-Netzwerk ein WLAN nach dem Standard IEEE 802.11 mit Frequenzen von 2-6 GHz verwendet. Die Signale zwischen der Kommunikationseinheit und der Steuerung und auch die Signale zwischen den Funk-Zutrittskontrolleinrichtungen und der Kommunikationseinheit werden (herkömmlich) per Funk, mit einer Frequenz zwischen 500 MHz und 1000 MHz, z. B. 868,3 MHz übermittelt.
Die Erfindung betrifft ein Verfahren zum Betrieb einer solchen Schließanlage für eine Gebäudetür. Dieses Verfahren ist dadurch gekennzeichnet, dass die Zutrittsberechtigung der Funk-Zutrittskontrolleinrichtungen nicht mehr in der Steuerung, sondern in der Kommunikationseinheit gespeichert wird. Dementsprechend werden die Zutrittsberechtigungen im Zuge der Betätigung einer Funk-Zutrittskontrolleinrichtung nicht mehr in der Steuerung, sondern in der Kommunikationseinheit geprüft. Im Zuge eines Öffnungsversuchs übermittelt die Funk-Zutrittskontrolleinrichtung folglich einen Öffnungsbefehl an die Kommunikationseinheit und im Falle einer positiven Überprüfung der Berechtigung sendet die Kommunikationseinheit ein Öffnungssignal an die Steuerung. Die Steuerung entriegelt dann das Schloss über den Motor, d.h. die Steuerung gibt einen Befehl zum Entriegeln des Schlosses an den Motor.

Die Erfindung wurde beispielhaft anhand einer bevorzugten Ausführungsform erläutert, bei welcher die Schließanlage als Schließeinrichtung ein motorbetriebenes Schloss aufweist, welches über die Steuerung entriegelbar ist bzw. entriegelt wird. Das bedeutet, dass die Steuerung einen entsprechenden Befehl bzw. ein Signal zum Entriegeln des Schlosses an das Schloss bzw. an den Motor übermittelt. Die Erfindung umfasst aber auch Schließanlagen mit anderen elektrischen bzw. elektronischen Schließeinrichtungen, z.B. mit einem elektronischen Schließzylinder oder einem elektrischen bzw. elektronischen Beschlag. In einem solchen Fall kann die Steuerung diese Schließeinrichtung betätigen bzw. freigeben, indem z.B. der elektronische Schließzylinder freigeschaltet wird oder indem z.B. bei einem elektronischen Beschlag der Türdrücker freigegeben wird. Die vorstehenden Ausführungsformen lassen sich auch bei einer solchen Schließanlage realisieren.

Im Folgenden wird die Erfindung anhand einer lediglich ein Ausführungsbeispiel darstellenden Zeichnung näher erläutert.

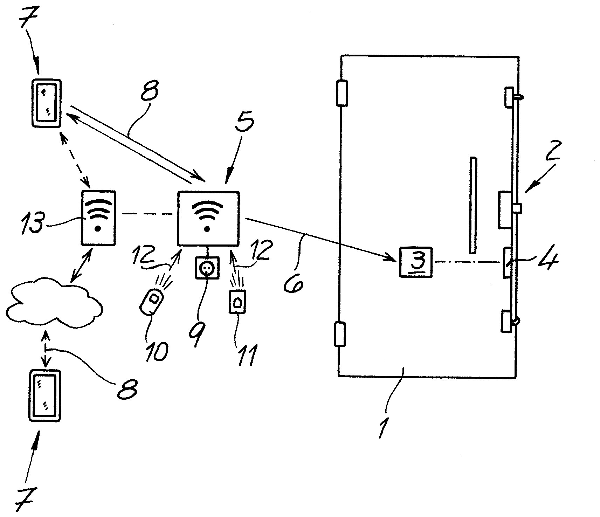

Die einzige Figur zeigt schematisch vereinfacht eine erfindungsgemäße Schließanlage und deren Funktionsweise.

In der Figur ist eine Schließanlage für eine Gebäudetür 1 mit einem motorbetriebenen Schloss 2 und einer Steuerung 3 dargestellt. Bei dem motorbetriebenen Schloss 2 handelt es sich besonders bevorzugt um eine Mehrfachverriegelung mit Zentralschloss und einer oder mehreren Zusatzverriegelungen, welche über Treibstangen mit dem Zentralschloss verbunden sind. Das Schloss 2 ist mit einem Motor ausgerüstet. Dazu kann bevorzugt ein (separates) Motoraggregat 4 vorgesehen sein, welches ebenfalls über die Treibstangen mit der Zentralverriegelung und/oder den Zusatzverriegelungen verbunden ist. Über den Motor erfolgt zumindest eine Entriegelung des Schlosses 2. Die Verriegelung kann optional im Sinne einer Selbstverriegelung mechanisch erfolgen (halbmotorisches Schloss). Die Erfindung umfasst aber auch vollmotorische Schlösser, bei denen über den Motor sowohl die Verriegelung als auch die Entriegelung erfolgt. Die Steuerung 3 kann unmittelbar am Schloss (z.B. an oder in der Motoreinheit) angeordnet sein. Sie kann jedoch auch als (separate) Steuerung am Türblatt oder am Türrahmen angeordnet sein und z.B. kabelgebunden mit dem Schloss bzw. dem Motoraggregat 4 verbunden sein.

Erfindungsgemäß ist in Funkreichweite der Steuerung 3 eine Kommunikationseinheit 5 angeordnet, die als Netzwerkserver dient und in ein lokales Funk-Netzwerk eingebunden ist. Eine solche Kommunikationseinheit 5 weist außerdem einen Sender für die Übermittlung eines Öffnungssignals 6 per Funk an den Empfänger der Steuerung 3 auf. Außerdem weist die Kommunikationseinheit bevorzugt einen Empfänger für den Empfang von Funksignalen auf, z.B. von der Steuerung 3. Eine solche Kommunikationseinheit 5 wird folglich - so wie ein herkömmlicher Funkschlüssel - in der Steuerung als "berechtigter Benutzer" hinterlegt. Dazu können ein oder mehrere Endgeräte 7 (z.B. Smartphones), die als Netzwerkclients arbeiten, in der Kommunikationseinheit 5 angemeldet werden. Mit Hilfe eines solchen Endgerätes 7 kann ein Öffnungsbefehl 8 an die Kommunikationseinheit 5 übermittelt werden, wobei daraufhin von der Kommunikationseinheit 5 ein Öffnungssignal 6 an die Steuerung 3 übermittelt wird. Die Kommunikation zwischen dem Endgerät 7 und der Kommunikationseinheit 5 erfolgt dabei über die WLAN-Technik. In dem Endgerät 7 (z.B. Smartphone) ist eine geeignete Anwendungssoftware (z.B. eine App) installiert, über welche eine einfache Bedienung und insbesondere Benutzerverwaltung möglich wird. So können eine Vielzahl von Endgeräten 7 in der Kommunikationseinheit 5 angelernt und über die Endgeräte 7 verwaltet werden. So lassen sich für eine Vielzahl von Smartphones oder dergleichen individuelle Nutzungen festlegen und auch temporäre Vorgaben bzw. Sperrungen realisieren. Die Sicherheit wird auch dadurch erhöht, dass Betätigungen und Einstellungsänderungen in einem Journal protokolliert werden. Bei der Kommunikationseinheit 5 handelt es sich um ein separat zur Verfügung gestelltes WLAN-Modul, welches bevorzugt mit einem Netzgerät ausgerüstet ist und in einfacher Weise in eine Netz-Steckdose 9 in der Nähe der Tür gesteckt wird.

In den Figuren ist gezeigt, dass die Kommunikationseinheit 5 als WLAN-Access Point mit dem Endgerät 7 kommunizieren kann, ohne dass ein bestehendes WLAN zur Verfügung stehen muss. Über das Endgerät kann der Nutzer in den WLAN-Einstellungen das Endgerät mit der Kommunikationseinheit 5 verbinden und dann über die App ohne Einschränkungen darauf zugreifen. So kann eine schnelle und einfache Nutzung ohne bestehendes WLAN erfolgen.

Alternativ ist jedoch in den Figuren auch gezeigt, dass die Kommunikationseinheit 5 in ein bestehendes WLAN mit Access Point/Router 13 integriert werden kann. In diesem Fall kann das Endgerät 7 auch über den WLAN-Access Point 13 mit der Kommunikationseinheit 5 kommunizieren. Außerdem besteht die Möglichkeit, dass ein Endgerät 7 über das Internet und über den Access Point/Router 13 mit der Kommunikationseinheit 5 kommuniziert.

Zusätzlich zu der Kommunikation der Endgeräte 7 (z.B. Smartphones) mit der Kommunikationseinheit 5 zum Öffnen des Schlosses 2 besteht erfindungsgemäß die Möglichkeit, herkömmliche Funk-Zutrittskontrolleinrichtungen 10, 11 zu verwenden. Dabei sind in der Figur beispielhaft ein Funkhandsender 10 und eine Funk-Fingerscaneinrichtung 11 dargestellt. Erfindungsgemäß werden diese Zutrittskontrolleinrichtungen 10, 11 nun jedoch nicht in herkömmlicher Weise in der Steuerung 3 angelernt, sondern erfindungsgemäß in der Zutrittskontrolleinrichtung 5. Die Zutrittsberechtigungen der einzelnen Zutrittskontrolleinrichtungen 10, 11 sind folglich in der Kommunikationseinheit 5 gespeichert. Zum Öffnen des Schlosses mit z.B. dem Funkhandsender 10 wird nun ein Öffnungsbefehl 12 von dem Funkhandsender nicht mehr an die Steuerung 3 übermittelt, sondern an die Kommunikationseinheit 5. Dort wird die Berechtigung überprüft und dann ein Öffnungssignal 6 an die Steuerung übermittelt. Die Steuerung 3 muss folglich überhaupt keine Kenntnis darüber haben, welche Zutrittskontrolleinrichtungen 10, 11 angelernt wurden und folglich als zutrittsberechtigt gespeichert sind. Die in der Kommunikationseinheit 5 gespeicherten Informationen lassen sich hervorragend über die verschiedenen Endgeräte, z.B. Smartphones oder auch PCs visualisieren und bearbeiten, so dass die Bedienung erheblich vereinfacht wird.

## Patentansprüche

1. Verfahren zum Betrieb einer Schließanlage für eine Gebäudetür (1) mit zumindest
- einer Schließeinrichtung, z.B. einem motorbetriebenen Schloss (2),
- einer Steuerung (3) mit einem Empfänger für den Empfang eines Öffnungssignals per Funk,
- einer in Reichweite der Steuerung angeordneten WLAN-Kommunikationseinheit (5) als Netzwerkserver, welche als WLAN-Accesspoint in ein lokales WLAN-Funknetzwerk eingebunden ist und welche außerdem einen Sender für die Übermittlung eines Öffnungssignals (6) per Funk an den Empfänger der Steuerung (3) sowie einen Empfänger für den Empfang von Funksignalen aufweist,
- zumindest einem als Netzwerkclient arbeitenden Endgerät (7), welches in der WLAN-Kommunikationseinheit (5) angemeldet wird und mit dem ein Öffnungsbefehl (8) an die Kommunikationseinheit (5) übermittelbar ist,
- einer oder mehreren Funk-Zutrittskontrolleinrichtungen (10, 11) mit einem Sender für die Übermittlung eines Öffnungssignals (12) per Funk an den Empfänger der WLAN-Kommunikationseinheit (5),
wobei das lokale WLAN-Funknetzwerk für die Kommunikation zwischen Endgeräten (7) und WLAN-Kommunikationseinheit (5) nach dem Standard IEEE 802.11 mit Frequenzen von 2 bis 6 GHz arbeitet,
wobei die Signale zwischen Kommunikationseinheit (5) und Steuerung (3) und die Signale zwischen dem Funk-Zutrittskontrolleinrichtungen (10, 11) und der Kommunikationseinheit (5) per Funk mit einer Frequenz zwischen 500 MHz und 1000 MHz, übermittelt werden,
wobei die Zutrittsberechtigungen der Funk-Zutrittskontrolleinrichtungen (10, 11) in der WLAN-Kommunikationseinheit (5) gespeichert werden,
wobei mit der Zutrittskontrollvorrichtung (10, 11) ein Öffnungssignal (12) per Funk an die Kommunikationseinheit (5) gesendet und in der WLAN-Kommunikationseinheit (5) die Zutrittsberechtigung geprüft wird und
wobei im Falle einer positiven Überprüfung von der WLAN-Kommunikationseinheit (5) ein Öffnungssignal (6) per Funk an die Steuerung (3) der Schließanlage übermittelt wird.

2. Verfahren nach Anspruch 1, **dadurch gekennzeichnet, dass** als Funk-Zutrittskontrolleinrichtungen (10, 11) Funk-Handsender (10), Funk-Transponder, Funk-Fingerscanvorrichtungen (11) oder Funk-Codeeingabeeinrichtungen verwendet werden.

3. Verfahren nach Anspruch 1 oder 2, **dadurch gekennzeichnet, dass** ein Endgerät (7) verwendet wird, das mit einer optischen Anzeige und mit einer Eingabemöglichkeit ausgerüstet ist, z.B. als Mobiltelefon oder Smartphone, als PDA, als Tablet PC oder als Rechner, z.B. als Arbeitsplatzrechner, Laptop oder Notebook, ausgebildet ist.

4. Verfahren nach einem der Ansprüche 1 bis 3, **dadurch gekennzeichnet, dass** die Kommunikationseinheit (5) mit dem Endgerät (7) via TCP/IP kommuniziert.

5. Schließanlage für eine Gebäudetür (1), mit zumindest
- einer Schließeinrichtung, z.B. einem motorbetriebenen Schloss (2),
- einer Steuerung (3) mit einem Empfänger für den Empfang eines Öffnungssignals per Funk,
- einer in Reichweite der Steuerung angeordneten WLAN-Kommunikationseinheit (5) als Netzwerkserver, welche als WLAN-Accesspoint in ein lokales WLAN-Funknetzwerk eingebunden ist und welche außerdem einen Sender für die Übermittlung eines Öffnungssignals (6) per Funk an den Empfänger der Steuerung (3) sowie einen Empfänger für den Empfang von Funksignalen aufweist,
- zumindest einem als Netzwerkclient arbeitenden Endgerät (7), welches in der WLAN-Kommunikationseinheit (5) angemeldet wird und mit dem ein Öffnungsbefehl (8) an die Kommunikationseinheit (5) übermittelbar ist,
- einer oder mehreren Funk-Zutrittskontrolleinrichtungen (10, 11) mit einem Sender für die Übermittlung eines Öffnungssignals (12) per Funk an den Empfänger der WLAN-Kommunikationseinheit (5),
wobei das lokale WLAN-Funknetzwerk für die Kommunikation zwischen Endgeräten (7) und WLAN-Kommunikationseinheit (5) nach dem Standard IEEE 802.11 mit Frequenzen von 2 bis 6 GHz arbeitet,
wobei die Signale zwischen Kommunikationseinheit (5) und Steuerung (3) und die Signale zwischen dem Funk-Zutrittskontrolleinrichtungen (10, 11) und der Kommunikationseinheit (5) per Funk mit einer Frequenz zwischen 500 MHz und 1000 MHz, übermittelt werden,
wobei die Schließanlage für die Durchführung des Verfahrens nach einem der Ansprüche 1 bis 4 eingerichtet ist.

## Claims

1. A method for operating a closing system for a building door (1), having at least
- a closing device, e.g. a motorised lock (2),
- a controller (3) with a receiver for receiving an opening signal by radio,
- a WLAN communication unit (5) as a network server, which is situated within range of the controller and is integrated as a WLAN access point in a local WLAN radio network, and also has a transmitter for transmitting an opening signal (6) by radio to the receiver of the controller (3) and a receiver for receiving radio signals,
- at least one terminal (7) which operates as a network client and is logged into the WLAN communication unit (5) and with which an opening command (8) can be transmitted to the communication unit (5),
- one or more radio access control devices (10, 11) with a transmitter for transmitting an opening signal (12) by radio to the receiver of the WLAN communication unit (5),
wherein the local WLAN radio network for communication between the terminals (7) and the WLAN communication unit (5) operates according to the standard IEEE 802.11 at frequencies of 2 to 6 GHz,
wherein the signals between the communication unit (5) and the controller (3) and the signals between the radio access control devices (10, 11) and the communication unit (5) are transmitted by radio at a frequency between 500 MHz and 1000 MHz,
wherein the access authorisations of the radio access control devices (10, 11) are stored in the WLAN communication unit (5),
wherein the access control device (10, 11) is used to send an opening signal (12) by radio to the communication unit (5), and the access authorisation is checked in the WLAN communication unit (5), and wherein, if the check by the WLAN communication unit (5) is positive, an opening signal (6) is transmitted by radio to the controller (3) of the closing system.

2. The method according to Claim 1,
**characterised in that**
portable radio transmitters (10), radio transponders, radio finger-scanning devices (11) or radio code input devices are used as radio access control devices (10, 11) .

3. The method according to Claim 1 or 2,
**characterised in that**
a terminal (7) is used which is equipped with an optical display and an input facility, e.g. is designed as a mobile telephone or smartphone, as a PDA, as a tablet PC or as a computer, e.g. as a desktop computer, laptop or notebook.

4. The method according to any one of Claims 1 to 3,
**characterised in that**
the communication unit (5) communicates with the terminal (7) via TCP/IP.

5. A closing system for a building door (1), having at least
- a closing device, e.g. a motorised lock (2),
- a controller (3) with a receiver for receiving an opening signal by radio,
- a WLAN communication unit (5) as a network server, which is situated within range of the controller and is integrated as a WLAN access point in a local WLAN radio network, and also has a transmitter for transmitting an opening signal (6) by radio to the receiver of the controller (3) and a receiver for receiving radio signals,
- at least one terminal (7) which operates as a network client and is logged into the WLAN communication unit (5) and with which an opening command (8) can be transmitted to the communication unit (5),
- one or more radio access control devices (10, 11) with a transmitter for transmitting an opening signal (12) by radio to the receiver of the WLAN communication unit (5),
wherein the local WLAN radio network for communication between the terminals (7) and the WLAN communication unit (5) operates according to the standard IEEE 802.11 at frequencies of 2 to 6 GHz,
wherein the signals between the communication unit (5) and the controller (3) and the signals between the radio access control devices (10, 11) and the communication unit (5) are transmitted by radio at a frequency between 500 MHz and 1000 MHz,
wherein the closing system is designed to carry out the method according to any one of Claims 1 to 4.

## Revendications

1. Procédé opérationnel d'un système de fermeture destiné à une porte de bâtiment (1), pourvu d'au moins
- un dispositif de fermeture, par ex. une serrure (2) actionnée par moteur,
- un système de commande (3), doté d'un récepteur pour la réception par radio d'un signal d'ouverture,
- une unité de communication WLAN (5) placée à la portée du système de commande, faisant office de serveur réseau, laquelle au titre de point d'accès WLAN, est intégrée dans un réseau sans fil WLAN local et laquelle comporte en outre un émetteur pour la transmission par radio d'un signal d'ouverture (6) au récepteur du système de commande (3), ainsi qu'un récepteur pour la réception de signaux radio,
- au moins un terminal (7) fonctionnant en qualité de client réseau, que l'on authentifie dans l'unité de communication WLAN (5) et à l'aide duquel un ordre d'ouverture (8) est transmissible à l'unité de communication (5),
- un ou plusieurs dispositifs radio de contrôle d'accès (10, 11), doté(s) d'un émetteur, pour la transmission par radio d'un signal d'ouverture (12) au récepteur de l'unité de communication WLAN (5),
pour la communication entre des terminaux (7) et l'unité de communication WLAN (5), le réseau sans fil WLAN local fonctionnant selon le standard IEEE 802.11, à des fréquences de 2 à 6 GHz,
les signaux entre l'unité de communication (5) et le système de commande (3) et les signaux entre le dispositif radio de contrôle d'accès (10, 11) et l'unité de communication (5) étant transmis par radio, à une fréquence comprise entre 500 MHz et 1000 MHz,
les droits d'accès du dispositif radio de contrôle d'accès (10, 11) étant mémorisés dans l'unité de communication WLAN (5),
à l'aide du dispositif de contrôle d'accès (10, 11), un signal d'ouverture (12) étant envoyé par radio à l'unité de communication (5) et le droit d'accès étant vérifié dans l'unité de communication WLAN (5) et dans le cas d'une vérification positive, un signal d'ouverture (6) étant transmis par radio au système de commande (3) du système de fermeture par l'unité de communication WLAN (5).

2. Procédé selon la revendication 1, **caractérisé en ce que** sont utilisés en tant que dispositif radio de contrôle d'accès (10, 11) des émetteurs radio portatifs (10), des transpondeurs radio, des lecteurs d'empreinte radio (11) ou des dispositifs radio de saisie de code.

3. Procédé selon la revendication 1 ou 2, **caractérisé en ce qu'**il est utilisé un terminal (7) qui est équipé d'un affichage visuel et d'une possibilité de saisie, qui est conçu par ex. sous la forme d'un téléphone mobile ou d'un smartphone, d'un PDA, d'une tablette PC ou d'un ordinateur, par ex. d'un poste de travail, d'un ordinateur portable ou d'un notebook.

4. Procédé selon l'une quelconque des revendications 1 à 3, **caractérisé en ce que** l'unité de communication (5) communique avec le terminal (7) via TCP/IP.

5. Système de fermeture destiné à une porte de bâtiment (1), pourvu d'au moins
- un dispositif de fermeture, par ex. une serrure (2) actionnée par moteur,
- un système de commande (3), doté d'un récepteur pour la réception par radio d'un signal d'ouverture,
- une unité de communication WLAN (5) placée à la portée du système de commande, faisant office de serveur réseau, laquelle au titre de point d'accès WLAN, est intégrée dans un réseau sans fil WLAN local et laquelle comporte en outre un émetteur pour la transmission par radio d'un signal d'ouverture (6) au récepteur du système de commande (3), ainsi qu'un récepteur pour la réception de signaux radio,
- au moins un terminal (7) fonctionnant en qualité de client réseau, que l'on authentifie dans l'unité de communication WLAN (5) et à l'aide duquel un ordre d'ouverture (8) est transmissible à l'unité de communication (5),
- un ou plusieurs dispositifs radio de contrôle d'accès (10, 11), doté(s) d'un émetteur, pour la transmission par radio d'un signal d'ouverture (12) au récepteur de l'unité de communication WLAN (5),
pour la communication entre des terminaux (7) et l'unité de communication WLAN (5), le réseau sans fil WLAN local fonctionnant selon le standard IEEE 802.11, à des fréquences de 2 à 6 GHz,
les signaux entre l'unité de communication (5) et le système de commande (3) et les signaux entre le dispositif radio de contrôle d'accès (10, 11) et l'unité de communication (5) étant transmis par radio, à une fréquence comprise entre 500 MHz et 1000 MHz,
le système de fermeture étant aménagé pour la réalisation du procédé selon l'une quelconque des revendications 1 à 4.
